Europäisches Patentamt

European Patent Office

Office européen des brevets

(11) Publication number: **0 195 640**
A1

## (12) EUROPEAN PATENT APPLICATION

(21) Application number: **86301945.1**

(22) Date of filing: **17.03.86**

(51) Int. Cl.⁴: **B 23 K 1/12**
**B 23 K 35/30**
**//C04B37/02**

(30) Priority: **16.03.85 GB 8506882**

(43) Date of publication of application:
**24.09.86 Bulletin 86/39**

(84) Designated Contracting States:
**AT BE CH DE FR GB IT LI NL SE**

(71) Applicant: **BRITISH AEROSPACE PUBLIC LIMITED COMPANY**
**100 Pall Mall**
**London SW1Y 5HR(GB)**

(72) Inventor: **Peters, Alan BRITISH AEROSPACE PUBLIC LTD. CO.**
**ELECTRONIC SYSTEMS & EQUIPMENT DIV. Downshire Way**
**Bracknell Berkshire RG12 1QL(GB)**

(74) Representative: **Dowler, Edward Charles et al,**
**British Aerospace Public Limited Company Corporate Patents Department Brooklands Road**
**Weybridge Surrey, KT13 0SJ(GB)**

(54) Method of joining two members.

(57) When a ceramic member is fixed by brazing to a member made of metal such as stainless steel, weakness may be engendered in the ceramic near the brazed joint, Herein disclosed is a brazing method wherein the extent of any run-over of the brazing material onto the ceramic and/or the content of the titanium 'wetting' agent within the brazing material are carefully controlled to avoid such weakness.

EP 0 195 640 A1

Croydon Printing Company Ltd.

## METHOD OF JOINING TWO MEMBERS

This invention relates to a method of joining two members together and to articles made by this method.

According to one aspect of the invention, there is provided a method of brazing a metal member and a ceramic member together in which method the brazing material is kept within the confines of the joint between the two members and is not permitted to flow onto a portion of the ceramic which is not overlain by the metal member.

According to a further aspect, there is provided a method of brazing a metal member and a ceramic member together in which method titanium is made available during the brazing to permit proper wetting of the ceramic but the amount of titanium so made available is kept sufficiently low to prevent substantial combining of excess titanium with said ceramic member, for example the titanium could be kept to around 5% or so of the brazing material by weight.

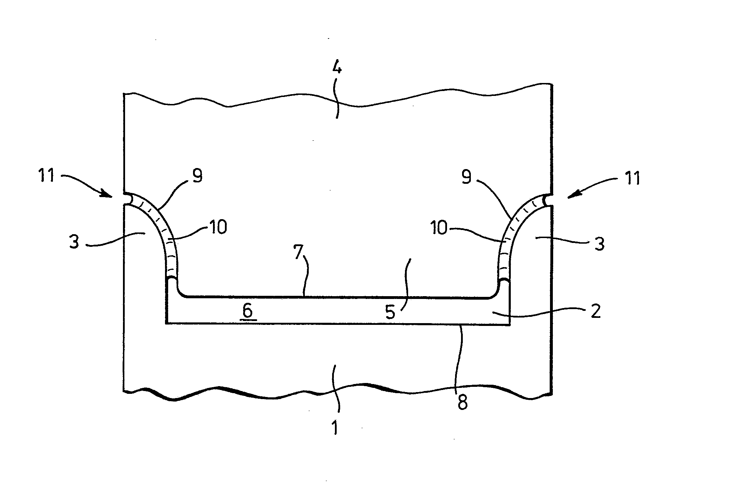

For a better understanding of the invention, reference will be made, by way of example, to the accompanying drawing, the single figure of which is a sectional view of part of an article comprising a ceramic member attached by brazing to a metal member.

The illustrated article comprises a member 1 made of EN56 stainless steel having a recess 2 formed therein, the upper part of the wall 3 defining the recess being radiussed as shown. A member 4 made of alumina ($Al_2O_3$) comprises a narrowed end portion 5 which fits into the recess 2 such that there is a comparatively large gap 6 between the end face 7 of the member 4 and the floor 8 of recess 2 The corner 9 forming the boundary between the narrowed end portion 5

0195640

and the remainder of member 4 is radiussed to match the upper part of wall 3. The periphery of the end face 7 of member 4 is rounded off. The members 1 and 4 are connected together by brazing, the brazing material 10 lying between wall 3 and end portion 5. The brazing operation has been carried out by positioning a pre-formed piece of brazing material between the members 1 and 4 and then, with the members properly held one in relation to the other, the article is placed in a vacuum furnace and heated to an appropriate temperature.

The brazing material comprises titanium, silver and copper in which the titanium forms around 5% by weight of the material.

As can be seen, the brazing material, after the joint has been made, remains entirely between the wall 3 and portion 5 of member 4 and has not been allowed to form a fillet extending from the joint over onto the outer surface of the member 4 at position 11 and nor has it been allowed to extend under the end face 7 of member 4. This is ensured by only using sufficient brazing pre-form in the first place, that it does not tend to overflow from its desired situation, by making the gap 6 comparatively large so that there is less capillary effect here, and/or by pre-positioning suitable flow-stopping materials and coating to define flow limits for the brazing material. It may be important to carefully control the amount of titanium available to the brazed joint. Some titanium is necessary to give proper wetting of the ceramic but it should be sufficiently low so that there is little as possible excess titanium available to form undesireable compounds with the other brazing material constituents or with the constituents of the ceramic itself. Thus, the amount of titanium in the brazing material should be less than 15% by weight, or better less than 10%, or even better less than 7.5%, or even better still around 5% or even less.

In the arrangement shown, the maintaining of the brazing material within the joint may be important possibly because, if the material is allowed to form a fillet outside the joint, the destructive effect of the titanium compounds therein and in the underlying ceramic may, since at this position the supporting effect of wall 3 is absent, facilitate the formation of cracks in the ceramic. A similar effect might occur at the peripheral edge of the end face 7 if the brazing material were allowed to proceed around this edge. A further reduction of the tendency for cracks to start at this edge may be engendered by the illustrated rounding off of this edge.

As can be seen, the article is such that nowhere is there a sharp corner of the ceramic which is also in contact with brazing material.

The radiussing of the wall 3 and the adjacent corner 9 may help to reduce any hoop stressing of the ceramic by the wall 3 and/or the brazing material and any titanium compounds formed at this position.

The brazing material 10 is thin and uniform — preferably it is less than about 500 microns thick, or even better less than about 300 microns, or even better than that less than 200 microns, or even more better around 150 microns or perhaps even less.

- 4 -                                         0195640

<u>CLAIMS</u>

1.    Method of brazing a metal member and a ceramic member together in which method the brazing material is kept within the confines of the joint between the two members and is not permitted to flow onto a portion of the ceramic which is not overlain by the metal member.

2.    A method of brazing a metal member and a ceramic member together in which method titanium is made available during the brazing to permit proper wetting of the ceramic but the amount of titanium so made available is kept sufficiently low to prevent substantial combining of excess titanium with said ceramic member, for example the titanium could be kept to around 5% or so of the brazing material by weight.

0195640

# EUROPEAN SEARCH REPORT

## DOCUMENTS CONSIDERED TO BE RELEVANT

EP 86301945.1

| Category | Citation of document with indication, where appropriate, of relevant passages | Relevant to claim | CLASSIFICATION OF THE APPLICATION (Int. Cl.4) |
|---|---|---|---|
| X | DE - B - 1 030 756 (TELEFUNKEN GMBH) <br> * Claims * <br><br> -- | 1,2 | B 23 K   1/12 <br> B 23 K 35/30 <br> /C 04 B 37/02 |
| A | GB - A - 1 170 364 (P.R.MALLORY & CO. INC.) <br> * Claims * <br><br> -- | 1,2 | |
| A | FR - A - 1 086 609 (TELEFONAKTIE-BOLAGET L.M. ERICSSON) <br> * Claims * <br><br> ---- | 1,2 | |

**TECHNICAL FIELDS SEARCHED (Int. Cl.4)**

B 23 K

The present search report has been drawn up for all claims

| Place of search | Date of completion of the search | Examiner |
|---|---|---|
| VIENNA | 16-06-1986 | SLAMA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82